# EUROPEAN PATENT SPECIFICATION

(11) **EP 1 790 901 B1**
(45) Date of publication and mention of the grant of the patent: **03.10.2018**
(21) Application number: 07103148.8
(22) Date of filing: 19.11.2002
(51) Int. Cl.: F16M 11/10

(54) **A tilting monitor**
Kippbarer Monitor
Ecran de visualisation inclinable

(30) Priority: 19.11.2001 KR 20010071860; 20.05.2002 KR 20020027683; 17.09.2002 KR 20020056429
(43) Date of publication of application: 30.05.2007
(62) Divisional of application: 02257951.0
(73) Proprietor: Samsung Electronics Co., Ltd., Gyeonggi-do 16677 (KR)
(72) Inventor: Jeong, Jun-soo, Suwon-City Kyungki-do (KR); Jung, Hyun-jun, Paldal-ku Suwon-City Kyungki-do (KR)
(74) Representative: Grey, Ian Michael

(56) References cited:
- WO-A-00/73027
- JP-A- 2001 075 486
- US-A- 4 438 458
- US-A- 5 335 142
- US-A- 5 812 368
- US-A- 6 056 248
- US-A- 6 125 507

## Description

The present invention relates to a monitor support comprising a base member, a coupling member for attachment of a monitor main body thereto, a link member extending between the coupling member and the base member and pivotally mounted to the coupling member to allow the monitor main body to be tilted for inclination adjustment, wherein the pivotal mounting between the coupling member and the link member comprises a monitor angle restricting device configured so as to restrict tilting of the coupling member relative to the link member within a predetermined reference angle range.

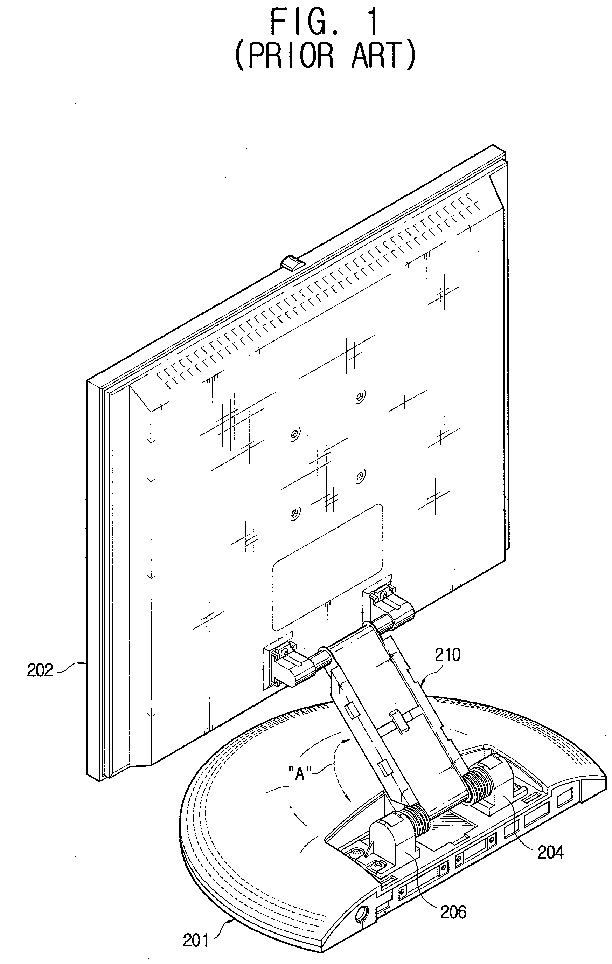

A conventional monitor is shown in Figure 1 and includes a base member 201 adapted to lie in a horizontal plane, a monitor body 202 having a display (not shown) and a link member 210 to link the base member 201 with the body 202.

A lower end of the link member 210 is rotatably mounted on the base member 201 by a pair of fixing brackets 204,206 and an upper end of the link member 210 is attached to the body 202 so that the link member can rotate about a horizontal axis with respect to the base member 201 in a direction indicated by "A" in Figure 1. However, the main body 202 does not rotate relative to the link member 210 or does not rotate relative to the link member 210 as the link member 210 rotates relative to the base member 201. Therefore, it is difficult to position the main body 202 at the desired angle.

In another monitor stand, the upper end of the link member 210 is pivotally attached to the main body 202 so that the main body 202 can rotate relative to the link member 210, whereas the lower end of the link member 210 is fixed to the base member 201. Although this enables the angle of the main body 202 to be adjusted more easily, it is still difficult to position the main body 202 in a desired location.

It is also known to provide an arm stand to support a monitor and which is attached thereto in accordance with standards regulated by VESA (VIDEO ELECTRONIC STANDARD ASSOCIATION).

Another problem with a conventional monitor and monitor support stand is that because the base member 210 is designed to be laid in a horizontal plane, it is not possible to attach the monitor on an inclined or vertical plane such as a wall. Furthermore, because the main body 202 cannot be folded flat against the base member 201, the monitor must be packed in a state as shown in Figure 1, or in a state in which just the link member 210 is folded against the base member. Therefore, the monitor and monitor stand requires a substantial packing volume resulting in an increase in costs to store and transport the monitor. Finally, if regulations regarding the degree of angle adjustment of the main body 202 in relation to the base are different from country to country, it is difficult to adapt the monitor or monitor stand to meet all the regulations.

Further known apparatuses for mounting electrical devices such as monitors or mechanisms suitable therefore, are disclosed in US 5,335,142, WO 00/73027, US5,812,368, US 6,125,507, US 4,438,458, US 6,056,248 and JP 2001 075486.

A monitor support according to the present invention is characterised in that the predetermined reference angle range is defined at one end by an absolute end point beyond which the coupling member cannot tilt and, at the opposite end, by an intermediate stop point, the monitor angle restricting device being configured to allow the coupling member to be further tilted beyond the intermediate stop point of the predetermined reference angle range to a second absolute end point beyond which the coupling member cannot tilt when the coupling member is rotated further relative to the link member.

Preferably, the monitor angle restricting device comprises a stopper provided on the coupling member, a rotation-restricting washer coupled to the link member and having a projection restricting rotation of the stopper, and a flat spring having a projection which is restricted by the projection of the rotation-restricting washer within the predetermined reference angle range, and which can pass the projection of the rotation-restricting washer by being elastically deformed when the coupling member is further pressed beyond the predetermine reference angle range.

Preferably, the intermediate stop point is defined where the projection of the flat spring abuts the projection of the rotation restricting washer.

Advantageously, the absolute end points of the tilting of the coupling member relative to the link member are defined where the projection of the rotation restricting washer abuts each end of the stopper.

Preferably, the predetermined reference angle range is from -5° to 30°.

Preferably, the stopper is provided on the coupling member and the flat spring is coupled to the coupling member.

The monitor support preferably further comprises a base hinge to pivotally couple the link member with the base member, wherein the coupling member and the link member are foldable relative to the base member.

Preferably, the base member comprises a link accommodating part to accommodate the link member when the link member is folded against the base member.

Preferably, the base hinge comprises a tilt restricting device to restrict tilting of the link member relative to the base member, wherein a tilting angle of the link member against the base member is adjusted by the tilt restricting device.

The monitor support preferably further comprises an auxiliary link member to transmit tilting movement of the link member relative to the base member to tilting movement of the coupling member relative to the link member.

Preferably, the auxiliary link member is parallel with the link member and pivotally couples the coupling member with the base member.

Preferably, the base member is provided with at least one cable port for receiving at least one of an electrical power and a display related signal cable, and the coupling member is provided with a cable accommodating groove to accommodate a cable connected to the cable port.

Preferably, the link member includes a cable accommodating groove.

Preferably, the link member is provided with a cable accommodating part thereon to accommodate a portion of the cable connected to the cable port.

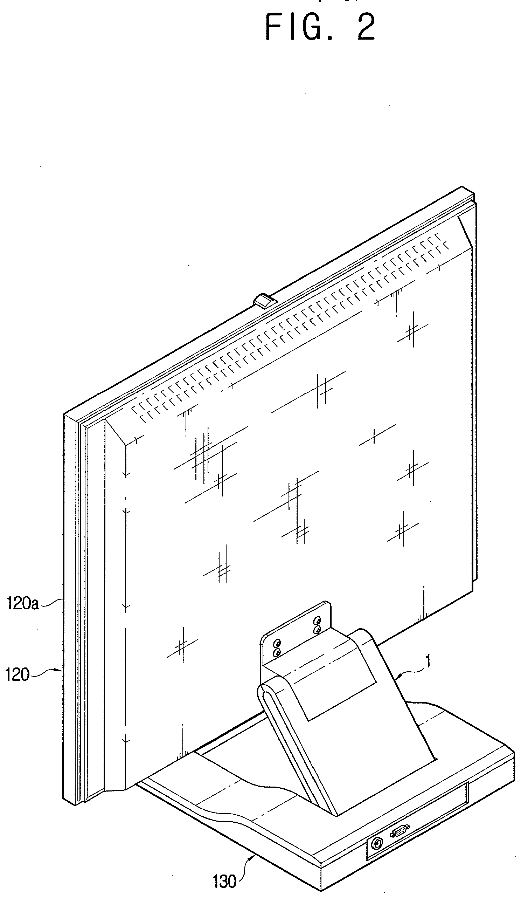

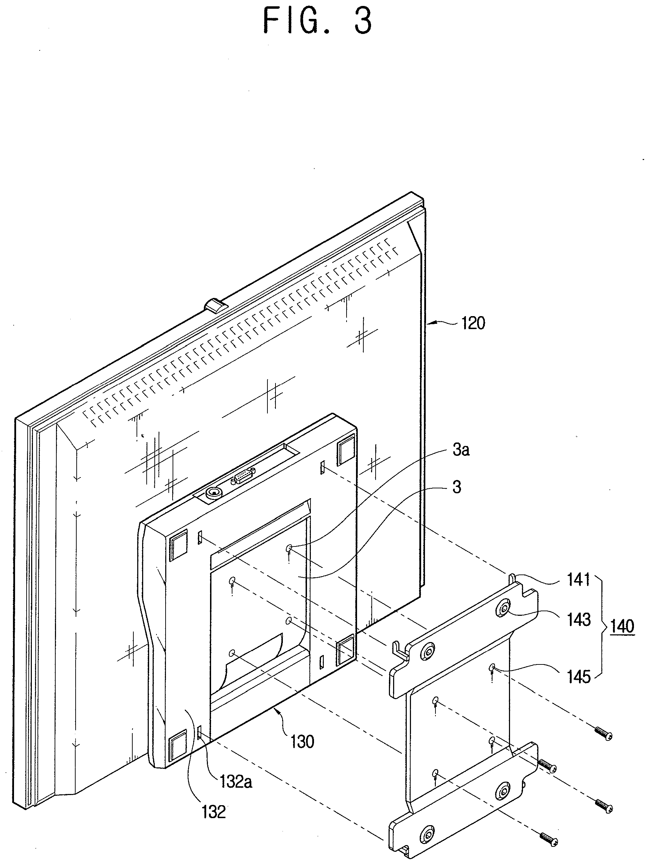

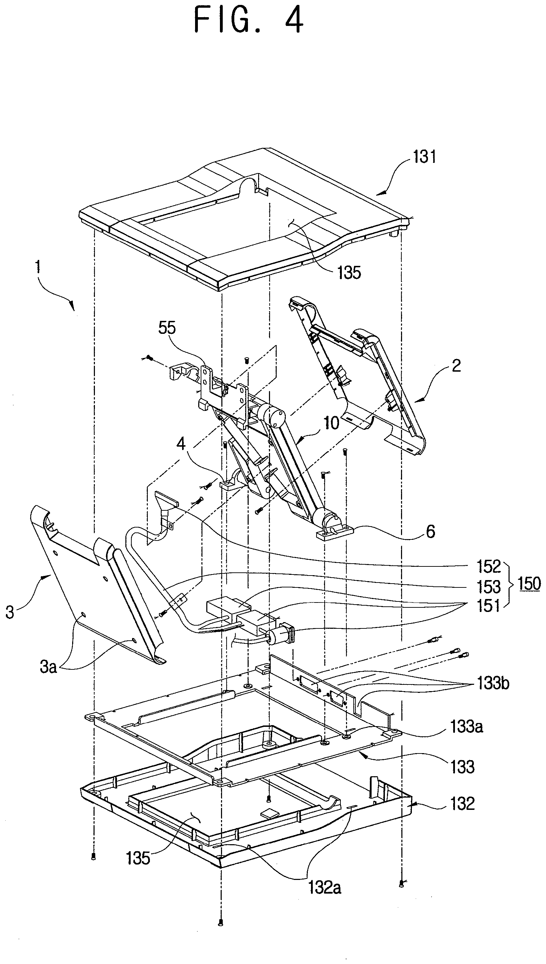

Embodiments of the invention will now be described, by way of example only, and in conjunction with Figures 2 to 20 of the accompanying drawings, in which:
Figure 1 is a perspective view illustrating a rear of a prior art monitor;
Figure 2 is a perspective view illustrating a rear of a monitor, according to an embodiment of the present invention;
Figure 3 is a perspective view illustrating the rear of the monitor of Figure 2, in which a base member and a base bracket are separated;
Figure 4 is a partially exploded perspective view of a link assembly and the base member of the monitor of Figure 2;
Figure 5 is an enlarged perspective view of the link assembly of figure 4;
Figure 6 is an exploded view of the link assembly of Figure 5;
Figures 7A through 7D are partially enlarged side views of the monitor in various operational positions;
Figures 8A through 8C are partially enlarged sectional views illustrating a base hinge part according to the operating state of the monitor in Figures 7A through 7D;
Figures 9A through 9D are partially enlarged sectional views illustrating a monitor hinge part according to the operational positions of the monitor in Figures 7A through 7D;
Figure 10 is a schematic view illustrating cables arranged in a link member of the monitor according to the present invention;
Figures 11A and 11B are side views illustrating the monitor being mounted on a wall;
Figures 12A and 12B are side views illustrating the monitor being mounted on an arm stand;
Figure 13A is a perspective view of a rear of a monitor according to another embodiment not part of the present invention;
Figure 13B is a partially enlarged perspective view of a link assembly of the monitor as shown in Figure 13A;
Figure 13C is an exploded perspective view of the link assembly as shown in Figure 13B;
Figure 14 through 17 are partially enlarged side views illustrating an operational position of the monitor shown in Figure 13A;
Figures 18A through 18C are partially enlarged sectional views illustrating a base hinge part according to the operational position of the monitor corresponding to Figures 14 through 17;
Figures Figure 19A through 19D are partially enlarged sectional views illustrating a monitor hinge part according to the operational positions of the monitor corresponding to Figures 14 through 17; and
Figure 20 is a perspective view illustrating a rear of a base member of the monitor, not according to the present invention.
As shown in Figures 2 and 3, a monitor according to an embodiment of the present invention includes a base member 130 positionable on a horizontal plane and a monitor main body 120 having a screen 120a. The monitor also includes a link assembly 1 linking the base member 130 with the monitor main body 120 and a base bracket 140 (see Figure 3) having a first side attached to the underside of the base member 130. The other side enables the base member to be mounted to an inclined plane such as a wall or an arm stand, etc.
A plurality of hooks 141 upstand from the first side of the base bracket 140 for engagement with the underside of the base member 130. The base bracket 140 also has a first set of holes 143 to facilitate attachment of the base bracket 140 to an inclined plane such as a wall, and a second set of holes 145 to facilitate attachment of the base bracket 140 to an arm stand provided with a mounting arrangement that conforms to standards set by VESA.
As shown in Figures 4 through 6, the base member 130 of the monitor includes a base supporting part 133 having a set of base mounting holes 133a to enable attachment of first and second fixing brackets 4 and 6 thereto (to be described later), an upper base cover 131 mountable on the base supporting part 133, and a lower base cover 132 provided beneath the base supporting part 133. The base member 130 also includes a link member accommodating part 135 formed in a central region to accommodate the link assembly 1, and a plurality of cable port receiving apertures 133b to receive a plurality of first cable ports 151 of a cable assembly 150 (to be described later). On a surface of the lower base cover 132 a plurality of hook holders 132a (see figure 3) are formed to receive the hooks 141 of the base bracket 140. The base supporting part 133 formed with the cable port receiving parts 133b and the set of base mounting holes 133a may be incorporated with the lower base cover 132 or the upper base cover 131.

The cable assembly 150 includes a plurality of first cable ports 151 which are fastened to the cable port receiving apertures 133b and connected to a computer (not shown). The cable assembly 150 also includes a cable plug 152 for connection to the monitor 120, and a cable 153 extending between the ports 151 and plug 152 that are accommodated in a link member 10.

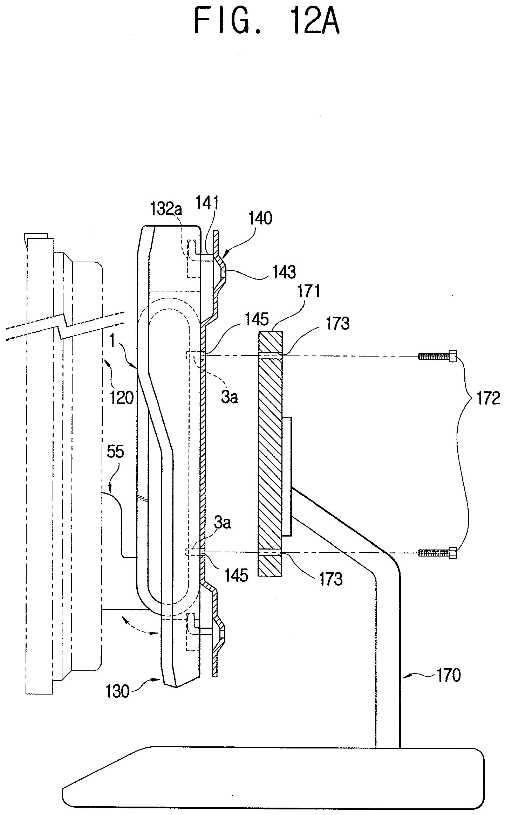

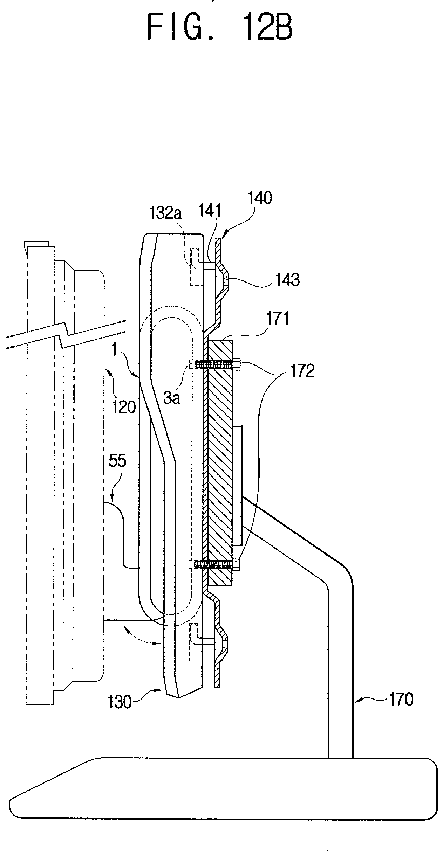

The link assembly 1 includes a link member 10 between the monitor main body 120 and the base member 130 and upper and lower link member covers 2,3 on either side of the link member 10. A base hinge 20 rotatably connects a lower end 10a of the link member 10 to the base member 130, and a monitor hinge 70 rotatably connects the upper end 10b of the link member 10 to the monitor main body 120. The lower link member cover 3 is formed with a third set of holes 3a that correspond to the second set of holes 145 in the base bracket 140 to enable attachment to an arm stand 170 (to be described later, see Figure 12).

The link member 10 is rotatable relative to the base member 130 within a predetermined angle range based on regulation requirements in various nations, for example, 0° through 65°.

The base hinge 20 is mounted to the first and second fixing brackets 4,6 on the base supporting part 133 of the base member 130 with bolts 7. The base hinge 20 includes first and second base hinge parts 30,40 rotatably connecting opposite sides of the lower end 10a of the link member 10 to the first and second fixing brackets 4,6 respectively. The first fixing bracket 4 additionally includes a spring supporting part 4a protruding from the first fixing bracket 4 toward the second fixing bracket 6.

The first base hinge part 30 includes a first pin accommodating part 31 formed on one side of the lower end 10a of the link member 10, a first boss accommodating part 32 formed in the spring supporting part 4a of the first fixing bracket 4, and a first hinge pin 33 having first and second ends 33a and 33b coupled to the first pin accommodating part 31 and the first boss accommodating part 32 respectively. The first end 33a of the first hinge pin 33 is rotatably received in the first pin accommodating part 31, and the second end 33b is fixed to the first boss accommodating part 32 so that it cannot rotate with respect thereto. The first end 33a of the first hinge pin 33 and the first pin accommodating part 31 have circular shaped sections, and the second end 33b of the first hinge pin 33 and the first boss accommodating part 32 have non-circular shaped sections.

A torsion spring 35 is received on the spring supporting part 4a of the first fixing bracket 4. The torsion spring 35 has one end supported by the right side of the lower part 10a of the link member 10 on which the first pin accommodating part 31 is formed, and the other end supported by the first fixing bracket 4. Further, the torsion spring 35 has elasticity acting in an opposite direction to downward tilting of the link member 10 against the base member 130. However, a restoring force of the torsion spring 35 is balanced by the weight of the link member 10 and the monitor and so when the link assembly 1, under a state as shown in Figure 2, is rotated relative to the base member 130 against the biasing force provided by the spring and released, the link assembly 1 maintains its new position.

The second base hinge part 40 includes a second pin accommodating part 41 formed on the other side of the lower end 10a of the link member 10, a first link supporting part 42 incorporated with the second fixing bracket 6 and formed with a second boss accommodating part 42a therein, and a second hinge pin 44 having first and second ends 44a, 44b coupled to the second pin accommodating part 41 and the second boss accommodating part 42a, respectively. Like the first hinge pin 33, the first end 44a of the second hinge pin 44 has a circular shaped section and is rotatably received into the second pin accommodating part 41. The second end 44b is fitted into the second boss accommodating part 42a so that it cannot rotate relative thereto.

The first and second base hinge parts 30,40 are provided with tilt restricting devices 50a,50b respectively, to allow the link member 10 to rotate relative to the base member 130 within a predetermined angular range.

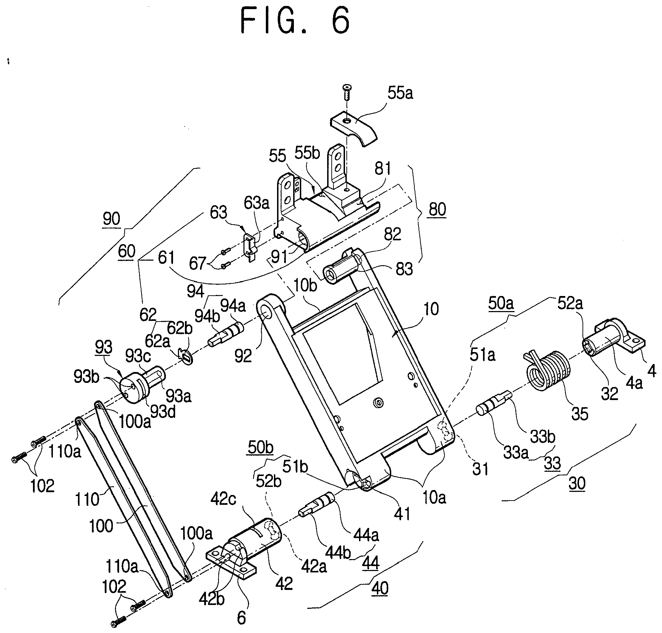

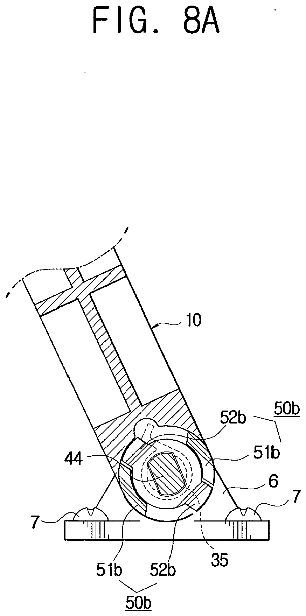

As shown in Figures 6 and 8A, the tilt restricting device 50a includes a pair of first stoppers 51a and a pair of first projections 52a. The pair of first stoppers 51a is formed by cutting a fan shaped groove in the lower part 10a of the link member 10 around the first pin accommodating part 31 to face each other. The pair of first projections 52a is provided around the first boss accommodating part 32 and is selectively engaged with the pair of first stoppers 51a according to the direction in which the link member 10 is tilted with respect to the base member.

Similarly, the tilt restricting device 50b includes a pair of second stoppers 51b and a pair of second projections 52b. Herein, the pair of second stoppers 51b is formed by cutting a fan shaped groove in the lower part 10a of the link member 10 around the second pin accommodating part 41 to face each other. The pair of second projections 52b is provided around the second boss accommodating part 42a accommodating the second hinge pin 44, and is selectively engaged with the pair of second stoppers 51b according to the direction in which the link member 10 is tilted with respect to the base member.

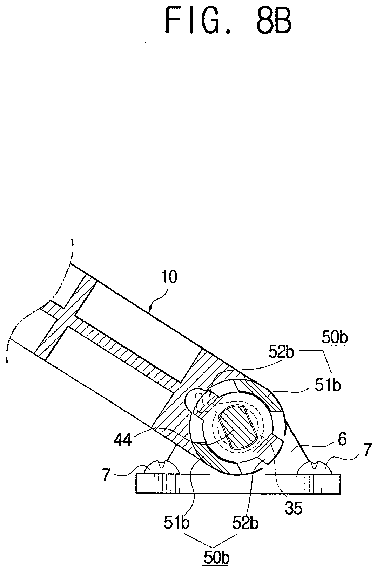

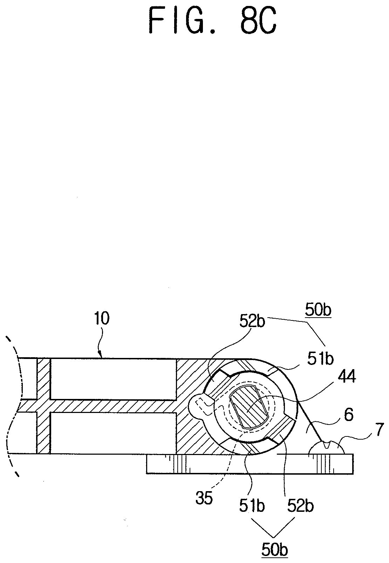

Therefore, if the link member 10 is pressed against the base member 130, the link member 10 rotates with respect to the base member 130 until the first and second stoppers 51a and 51b engage the first and second projections 52a,52b of the first and second boss accommodating parts 32 and 42a. The link member is now at a lower limit position (see Figures 8B and 8C).

If the link member 10 is rotated relative to the base member 130 in the other direction, the link member 10 moves until the first and second stoppers 51a and 51b engage the first and second projections 52a,52b. The link member is now at an upper limit position (see Figure 8A).

Thus, the angle in which the link member 10 may be placed with respect to the base member 130 may be controlled by the tilt restricting devices 50a,50b. Therefore, if regulation concerning a rotatable angle of the link member 10 differs from country to country, the sizes of the projections 52a,52b and the stoppers 51a,51b may be altered accordingly.

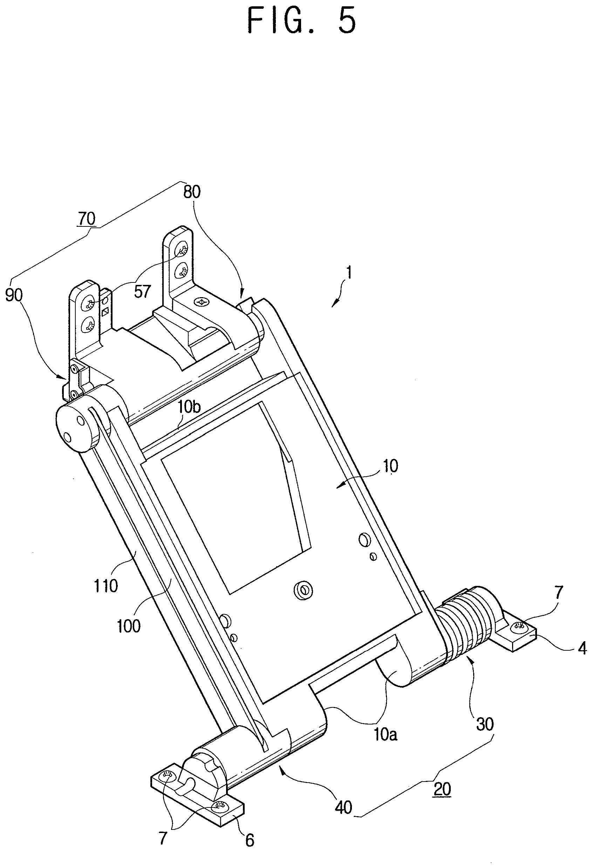

At the upper end 10b of the link member 10 is provided a monitor hinge 70 (see Figure 5) by which the monitor main body 120 may be rotated with respect to the link member 10 within a predetermined angle range. The range of the tilting angle may be properly determined based on regulation requirements in various nations, for example 5° through 30°.

The monitor hinge 70 includes first and second monitor hinge parts 80 and 90 respectively, rotatably mounted to opposite sides of a support 55 to which the monitor main body 120 may be mounted with bolts 57.

The first monitor hinge part 80 (see Figures 5 and 6) includes a first hinge holder 83 protruding inwardly from an upper arm of the link member 10, a first hinge accommodating groove 81 on the corresponding side of the support 55 and an accommodating groove cover 55a to cover the opening of the first hinge accommodating groove 81 when the first hinge holder 83 is disposed in the first hinge accommodating groove 81.

The second monitor hinge part 90 (see Figures 5 and 6) includes a third pin accommodating part 91 formed on a corresponding side of the support 55, a second hinge accommodating part 92 formed on the other side of the upper end 10b of the link member 10 opposite the first hinge holder 93, a second hinge holder 93c rotatably received in the second hinge accommodating part 92, and a third boss accommodating part 93a formed on a side of the second hinge holder 93c. The second monitor hinge part 90 also includes a second link supporting part 93 including the second hinge holder 93c and the third boss accommodating part 93a and a third hinge pin 94 having a first end 94a rotatably fitted in the third pin accommodating part 91 of the supporter 55 and a second end 94b matched to the third boss accommodating part 93a of the second link supporting part 93.

The third hinge pin 94 includes the first end 94a rotatably received in the third pin accommodating part 91 formed in the support 55, and the second end 94b having a non-circular section received in the third boss accommodating part 93a of the second link support part 93. The third hinge pin 94 is rotatably mounted within the third pin accommodating part 91 of the support 55 by a force stronger than torque due to a weight of the monitor main body 120. Therefore, in order to rotate the monitor main body 120 against the base member 10, a predetermined force must be applied. The second hinge holder 93c of the second link supporting part 93 combined to third hinge pin 94 is rotatably combined with the second hinge accommodating part 92, and rotation between the second hinge holder 93c of the second link supporting part 93 and the second hinge accommodating part 92 is achieved by auxiliary link members 100 and 110 (to be described later) which are combined to and geared with the second link supporting part 93.

The second monitor hinge part 90 is provided with a monitor angle restricting device 60 to restrict the angle of tilt of the monitor main body 120 with respect to the link member 10 within a predetermined angle range.

The monitor angle restricting device 60 (see Figure 6) includes an arc-shaped third stopper 61 which protrudes from the left side of the support 55 adjacent to the third pin accommodating part 91. The monitor angle restricting device 60 also includes a rotation-restricting washer 62 placed on the third hinge pin 94 and has a projection 62a for engagement with the third stopper 61 when the monitor main body 120 rotates relative to the link member. The monitor angle restricting device 60 also includes a flat spring 63 mounted on the left side of the support 55 to restrict rotation of the support 55 by engagement with the projection 62a.

On the rotation-restricting washer 62 is formed a non-circular shaped through hole 62b which engages and rotates together with the third hinged pin 94.

The flat spring 63 has a projection 63a which is elastically deformed when contacted by the projection 62a of the rotation-restricting washer 62. The flat spring 63 is attached to the support 55 using bolts 67.

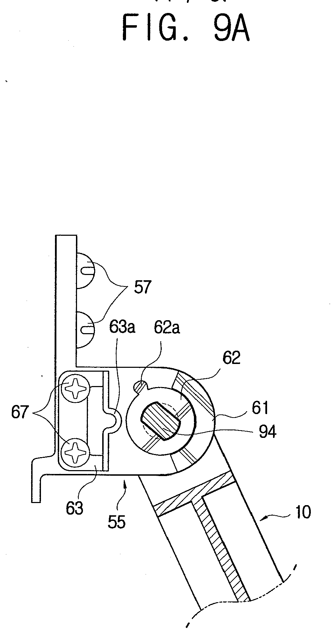

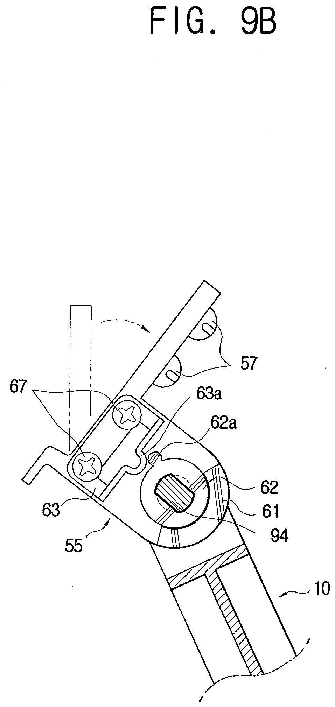

When the monitor main body 120 is forwardly pressed against the link member 10, the support 55 rotates on the first hinge holder 83 and the third hinge pin 94 until the projection 62a of the rotation-restricting washer 62 engages one side of the third stopper 61 formed on the support 55 (see Figure 9A) to prevent further rotation. Oppositely, when the monitor main body 120 is rotated in the opposite direction, the support 55 rotates until the projection 62a of the rotation-restricting washer 62 combined to the third hinge pin 94 is engaged with the projection 63a of the flat spring 63 on the support 55 (see Figure 9B).

Therefore, if the regulations defining a tilting angle of the monitor main body 120 varies in different nations the angle altered by changing sizes of the projection 62a and the third stopper 61, and by altering a position of the flat spring 63.

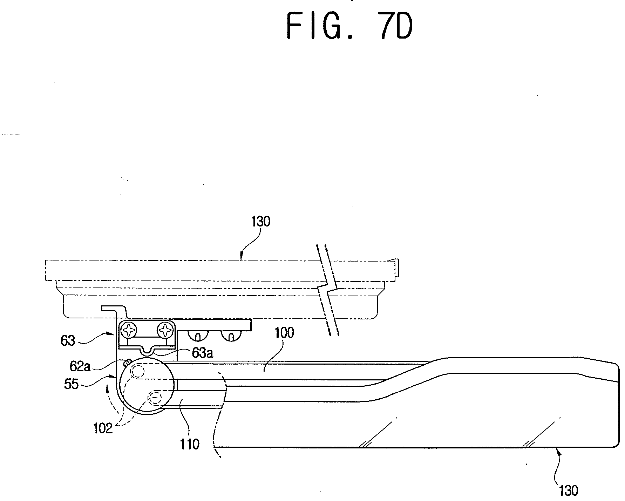

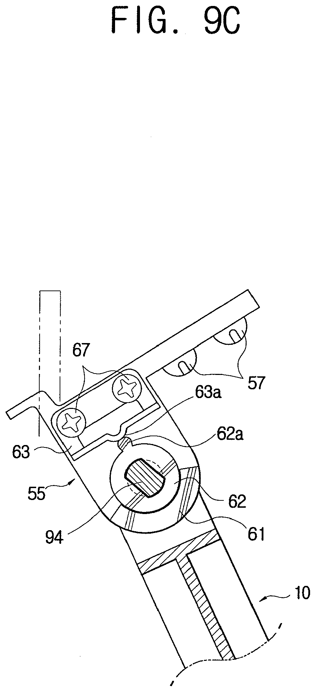

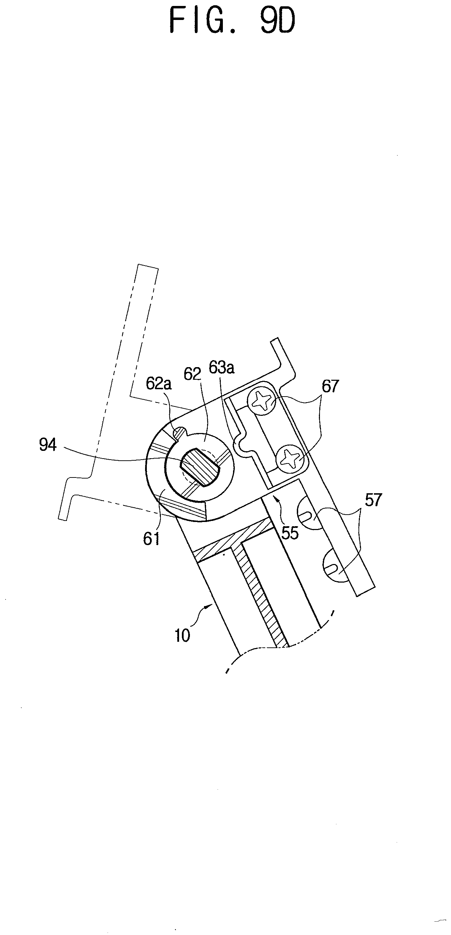

When the monitor main body 10 is to be folded against the base member 130 so that it lies parallel to it, as shown in Figure 7D, the projection 62a of the rotation-restricting washer 62 initially engages with the projection 63a of the flat spring 63 fastened to the support 55, further force will be sufficient to deform the projection 63a of the flat spring 63 elastically, thereby allowing the projection 62a of the rotation-restricting washer 62 to ride over the projection 63a of the flat spring 63 and to be engaged with the other side of the third stopper 61 (see Figures 9C and 9D).

The base member and the support 55 are coupled together so that when the link member 10 is rotated relative to the base member, the support 55, and the monitor, rotates relative to the link member 10. This maintains the monitor attached to the support 55 in the same orientation despite rotation of the link member relative to the base member.

To accomplish the foregoing, auxiliary link members 100,110 are provided to link rotation of the link member 10 relative to the base member 130 with rotation of the monitor main body 120 relative to the link member 10.

The auxiliary link members 100 and 110 are each in the form of a bar and their ends are mounted to the first and second link supporting parts 42 and 93, respectively, so that they lie parallel to each other. Auxiliary link accommodating parts 42c, 93d are provided in each of the first and second link supporting parts 42, 93 respectively, and a plurality of pin holes 42b, 93b spaced from each other at a predetermined distance. The pin holes 42b and 93b correspond to the auxiliary link accommodating parts 42c and 93d, respectively. On opposite ends of the auxiliary link members 100 and 110 through holes 100a and 110a are positioned to correspond to the pin holes 42b and 93b, respectively.

When both ends of the auxiliary link members 100 and 110 are inserted into the first and second link supporting parts 42 and 93, and the through holes 100a and 110a positioned on both ends of the auxiliary link members 100 and 110 respectively correspond to the pin holes 42c and 93b positioned on the first and second link supporting parts 42 and 93, the auxiliary link members 100 and 110 are coupled to the first and second link supporting parts 42 and 93, respectively, by a plurality of link coupling pins 102. Therefore, the pair of auxiliary link members 100 and 110 move in parallel with each other as the link member rotates relative to the base member.

Operation of each part of the monitor according to the present invention will be described below.

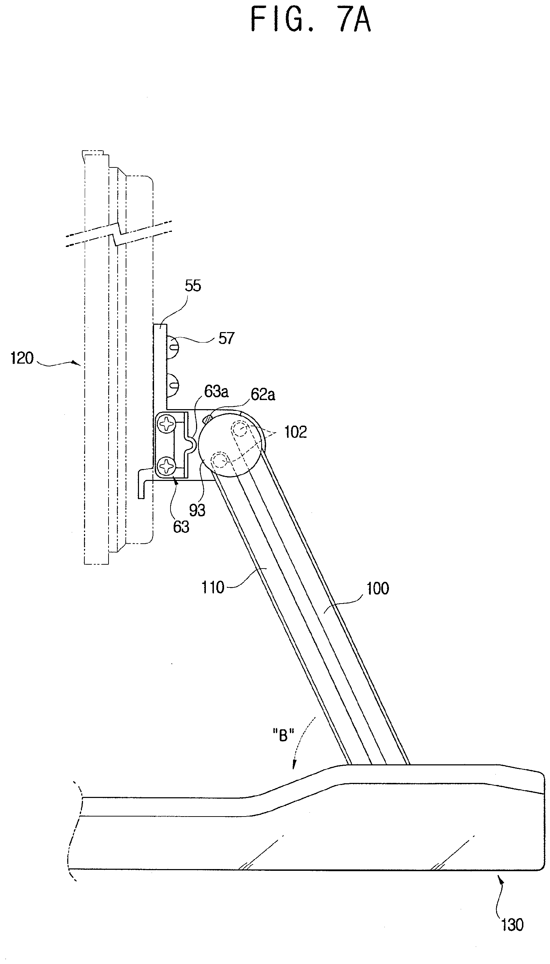

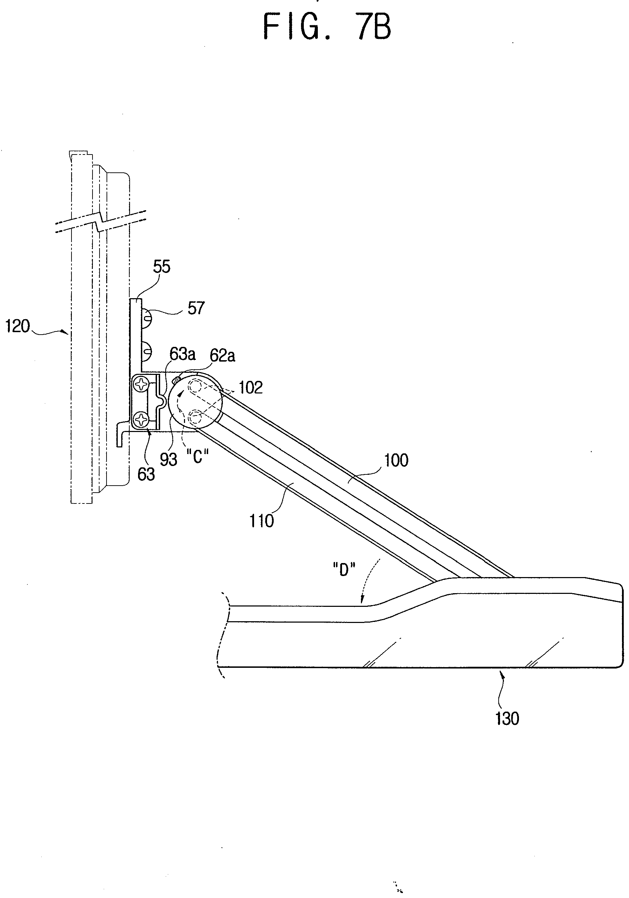

As shown in Figures 7A through 7D, the link member 10 is rotated downwardly in the direction of arrow "B" in Figure 7A. The link member 10 rotates on the first and second hinge pins 33 and 44 (see Figures 7B and 8B). The link member 10 rotates against a bias provided by the torsion spring 35 that holds the link arm stationary in any angular position when released.

As the link member 10 rotates relative to the base member, the second link supporting part 93 rotates as shown in Figure 7B, in a clockwise direction "C" at a predetermined angle due to the auxiliary link members 100 and 110. As the rotation of the second link supporting part 93 is linked with the third hinge pin 94, and the third hinge pin 94 is rotated together with the support 55, the monitor main body 120 remains at the same angle with respect to the base member 130. The rotation angle of the monitor main body 120 may be adjusted by altering a length and coupling position of the auxiliary link members 100 and 110. In the foregoing description, the reason that the third hinge pin 94 rotates together with the support 55 is that the third hinge pin 94 and the third pin accommodating part 91 of the support 55 are rotatably combined by force greater than the torque due to the weight of the monitor main body 120.

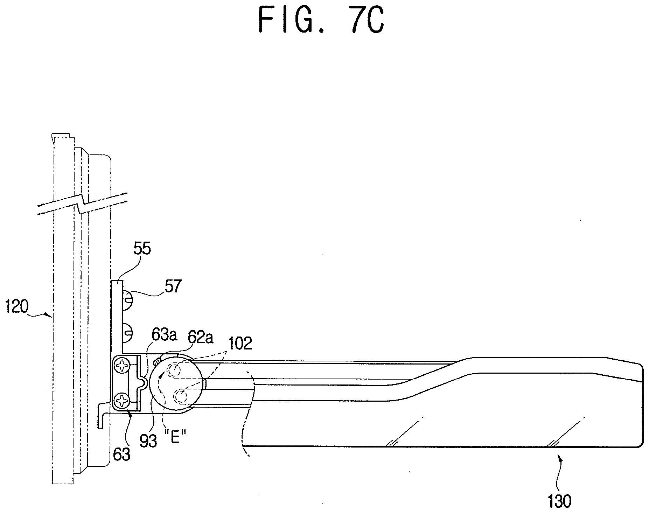

The link member 10 may be rotated relative to the base member 130 until the first and second stoppers 51a, 51b provided at the first and second base hinge parts 30 and 40 are engaged with the projections 52a, 52b each formed around the first and second boss accommodating part 32 and 42a (see Figure 8C). In this state, the link member 10 cannot rotate relative to the base member 130 any further in the same direction. This position is illustrated in Figure 7C. Here the second link supporting part 93 is rotated in a clockwise direction "E" beyond the state as illustrated in Figure 7B.

To fold the monitor main body 120 on to the base member 130, the monitor main body 120 is rotated relative to the link member until the projection 62a of the rotation-restricting washer 62 engages the projection 63a of the flat spring 63 fastened to the support 55. Further rotation of the monitor main body 120 in the same direction will cause the projection 63a of the flat spring 63 to deform elastically. The projection 62a of the rotation-restricting washer 62 is thereby allowed to rotate over the projection 63a of the flat spring 63 and to engage with the other side of the third stopper 61. Accordingly, the monitor main body 120 may be laid flat on the base member 130 (see Figures 7D and 9D).

As the monitor main body 120 may be laid flat on the same base member 130, the packing volume of the monitor is decreased, thereby decreasing costs to store and transport it.

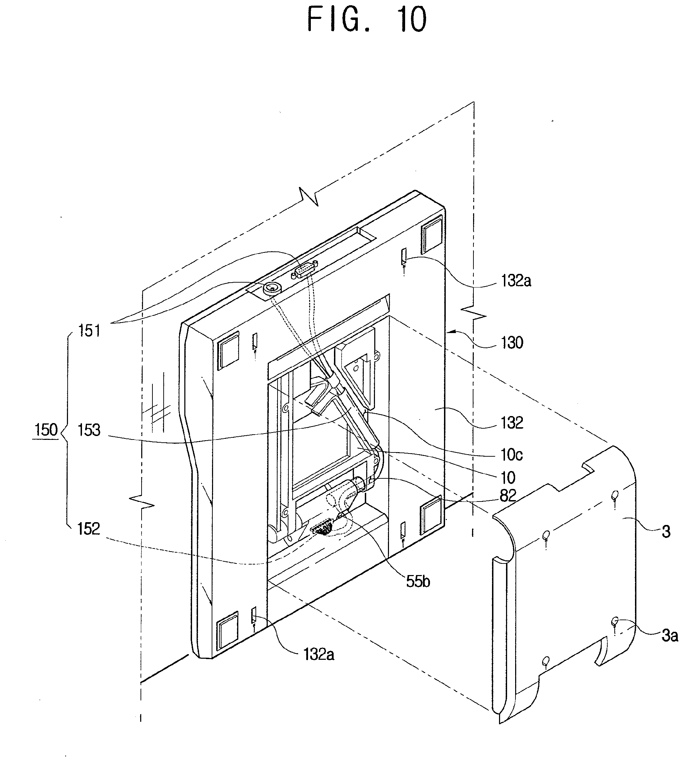

Figure 10 illustrates how the cables may be arranged in the link member 10 of the monitor. The link member 10 includes a cable accommodating part 10c to accommodate the cables 153 of the cable assembly 150. The first cable ports 151 of the cable assembly 150 are fastened to the port receiving parts 133b provided in the base member 130, and the cable plug 152 is connected to a part of the monitor main body 120. Cable accommodating grooves 55b, 82 are provided in the first hinge holder 83 of the link member 10 and the first hinge accommodating part 81 of the support 55 to accommodate and guide the cables 153 (see Figure 6).

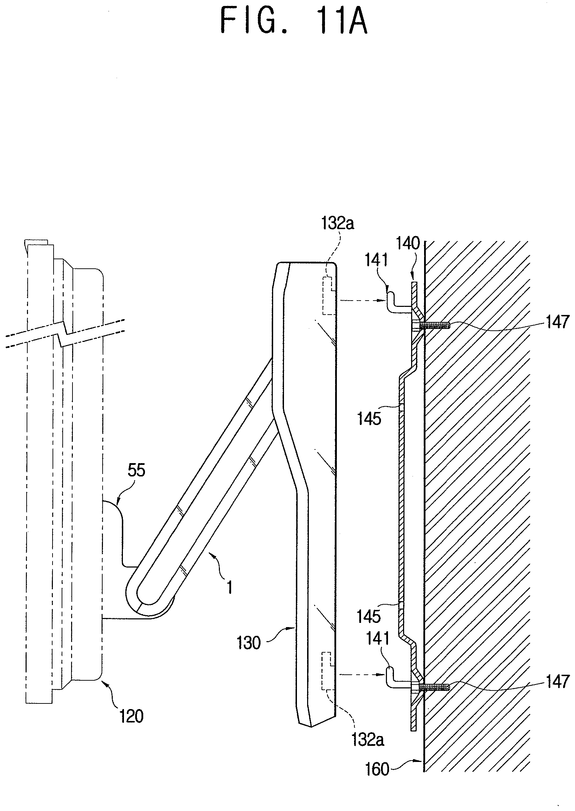

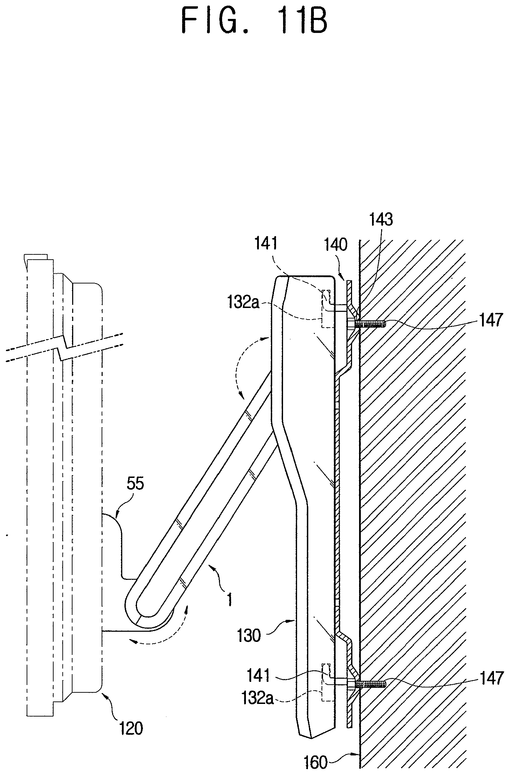

Figures 11A and 11B are side views illustrating how the monitor may be mounted on a wall. The base bracket 140 is first fastened to a wall 160 with bolts 147. Then the hook holders 132a of the base member 130 are hung on the hooks 141 of the base bracket 140. Therefore, the monitor may be detachable mounted on the wall 160.

Figures 12A and 12B are side views illustrating the monitor being mounted on an arm stand. As shown therein, the hooks 141 of the base bracket 140 are inserted in the hook holders 132a of the base member 130, thereby combining the base bracket 140 and base member 130. Further, a monitor supporting part 171 on the arm stand 170 has a plurality of bracket combining holes 173 located at positions set down by VESA. The base member 130 together with the base bracket 140 is mounted to the supporting part 171 using bolts 172 which couple with the third set of holes 3a in the lower link member cover 3 having been passed through the bracket mounting holes 173 of the monitor supporting part 171 and the second mounting holes 145 of the base bracket 140. Therefore, the monitor may be easily mounted on various arm stands and both the link member 10 and the base member 130 may be combined to the monitor supporting part 171 of the arm stand 170.

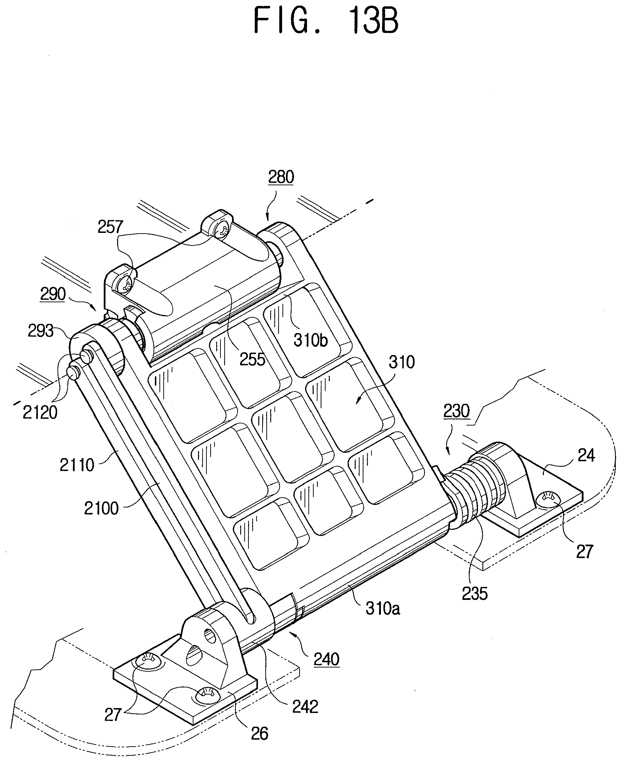

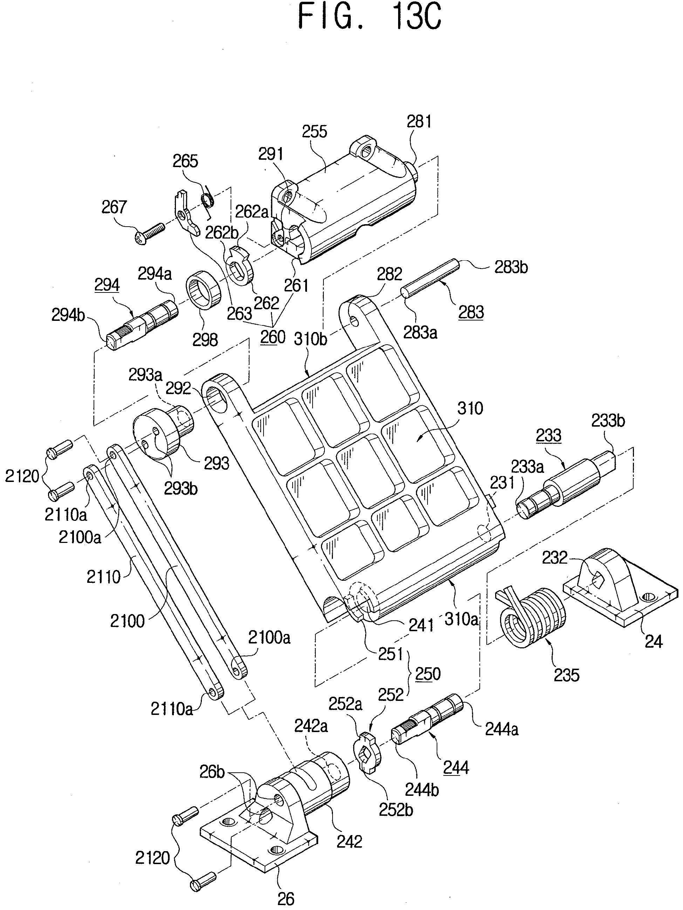

In the foregoing description, the torsion spring 35 is mounted to the first base hinge part 30. However, it may be provided in at least one of the first and second base hinge parts 30, 40 respectively. Further, the tilt-restricting device 50 may be provided in at least one of the first and second base hinge parts 30 and 40 respectively.
Further, the monitor angle restricting device 60 restricting the angle adjustment of the monitor may be provided in the first monitor hinge part 80.

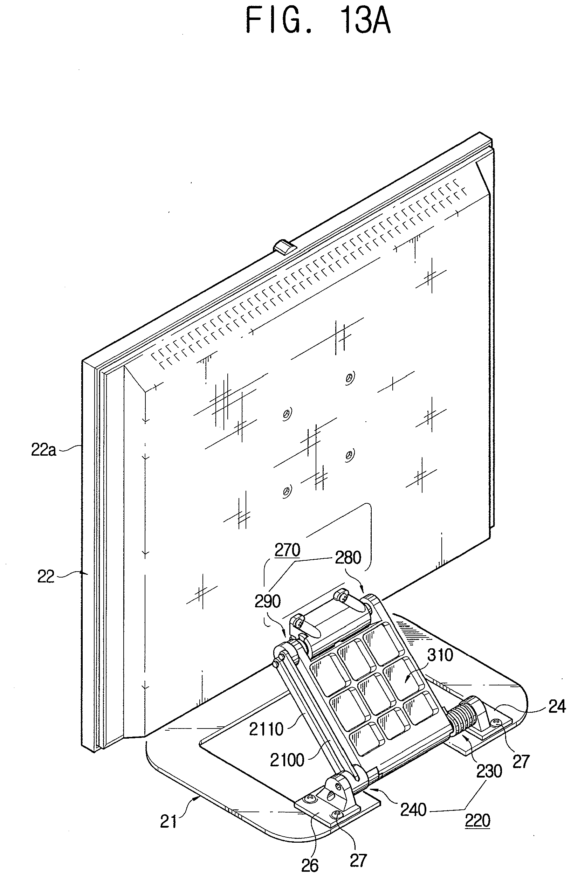

Figures 13A through 13C show a monitor having a link assembly and a base member according to another embodiment not part of the present invention.
As shown in Figures 13A through 13C the monitor includes a base member 21, a main body 22 having a screen 22a, a link member 310 linking the base member 21 with the main body 22, a base hinge 220 rotatably connecting a lower end 310a of the link member 310 to the base member 21, and a monitor hinge 270 rotatably connecting an upper end 310b of the link member 310 to the main body 22.
The link member 310 rotates relative to the base member 21 within a predetermined angle range based on regulation requirement in various nations, for example 0° through 65°.
A base hinge 220 is provided between first and second fixing brackets 24,26 spaced from each other by a predetermined distance and fastened to the base member 21 with bolts 27. The base hinge 220 includes first and second base hinge parts 230 and 240 rotatably mounting both edges of the lower part 310a of the link member 310 to the first and second fixing brackets 24,26 respectively.
The first base hinge part 230 (see Figures 13B and 13C) includes a first pin accommodating part 231 formed on a corresponding side of the lower end 310a of the link member 310, a boss accommodating part 232 formed on the first fixing bracket 24 and a first hinge pin 233 having first and second ends for coupling to the first pin accommodating part 231 and the boss accommodating part 232 respectively.

A first end 233a of the first hinge pin 233 is rotatably received in the first pin accommodating part 231 and has a predetermined friction therebetween. A second end 233b of the first hinge pin 233 is fitted into the boss accommodating part 232 so that it cannot rotate relative thereto. The first end 233a of the first hinge pin 233 and the first pin accommodating part 231 have circular shaped sections and the second end 233b of the hinge pin 233 and the boss accommodating part 232 have non-circular shaped sections. The friction between the first hinge pin 233 and the first pin accommodating part 231 prevents the link member 310 from rotating relative to the base member 21 due to the weight of the main body 22.

A first torsion spring 235 is placed on the first hinge pin 233 and one end of the first torsion spring 235 is positioned on the lower part 310a of the link member 310 on which the first pin accommodating part 231 is formed, and the other end thereof is positioned at the first fixing bracket 24.

The first torsion spring 235 provides elasticity acting in an opposite direction to a downward rotation of the link member 30 against the base member 21. The first torsion spring 235 provides a spring bias approximately equal to torque due to the weight of the main body 22 in the base hinge 220 so as to prevent the main body 22 falling under its own weight. Further, because there is friction between the first hinge pin 233 and the first hinge accommodating part 231 provided in the first base hinge part 230, and a friction between a second hinge pin 244 and a second hinge accommodating part 241 (to be described later) provided in the second base hinge part 240, the link member 310 is held stationary in any position when released. Therefore, to rotate the link member 310 relative to the base member 21, it must be urged by a force great enough to overcome the friction of the first and second base hinge parts 230,240.

The second base hinge part 240 (see Figures 13B and 13C) includes the second pin accommodating part 241 formed on the other side of the lower part 310a of the link member 310, a first link supporting part 242 combined to the second fixing bracket 26 and formed with a spline accommodating part 242a therein, and the second hinge pin 244 having first and second ends coupled to the second pin accommodating part 241 and the spline accommodating part 242a respectively.

The first end 244a of the second hinge pin 244 has a circular shaped section and is rotatably inserted into the second pin accommodating part 241 and has a predetermined friction therebetween. The second end 244b of the second hinge pin 244 is fitted into the spline accommodating part 242a so that it cannot rotate relative thereto. The second end 244b of the second hinge pin 244 is splined to engage the spline accommodating part 242a of the first link supporting part 242. The friction between the second hinge pin 244 and the second pin accommodating part 241 prevents the link member 310 from rotating relative to the base member due to the weight of the main body 22.

A rotation-angle restricting device 250 to restrict a rotation of the link member 310 relative to the base member 21 within a predetermined angular range is formed with the second base hinge part 240. The rotation-angle restricting means 250 is designed to meet rotation angle regulations according to VESA.

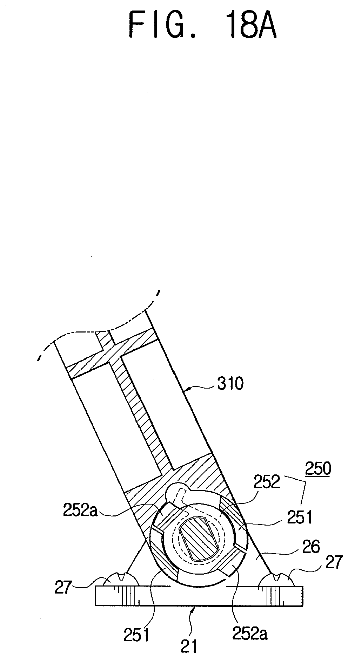

The rotation-angle restricting device 250 (see Figures 13C and 18A) includes a pair of first stoppers 251 formed on the lower end 310a of the link member 310 around the second pin accommodating part 241 so as to face each other. The rotation-angle restricting device 250 also includes a first rotation-restricting washer 252 placed on the second hinge pin 244 including a pair of projections 252a to be selectively engaged with the first stoppers 251 according to the direction of rotation of the link member 310.

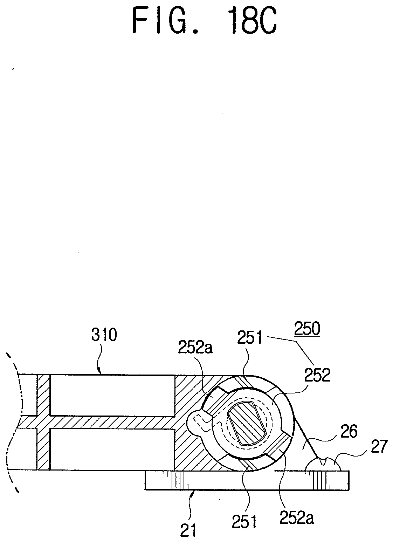

On the first rotation-restricting washer 252 is formed a non-circular shaped through hole 252b which engages with the second hinge pin 244. Therefore, the link member 310 may be rotated relative to the base member 21 in a first direction until the first stoppers 251 are engaged with the projections 252a of the first rotation-restricting washer 252 at a downward rotation limit position (see Figure 18C).

The link member 310 may also be rotated relative to the base member 21 in the opposite direction until the first stoppers 251 are engaged with the projections 252a of the first rotation-restricting washer 252 at an upward-rotation limit position (see Figure 18A).

Thus, the rotation angle of the link member 310 relative to the base member 21 may be restricted by the rotation-angle restricting device 250. Therefore, if the rotation angle of the link member 310 is different in various nations, the rotation angle of the link member 310 may be properly designed as necessary by altering sizes of the projections 252a and the first stoppers 251.

A monitor hinge 270 is provided at an upper end 310b of the link member 310 (see figure 13A) by which the monitor main body 22 may be rotated relative to the link member 310 within a predetermined angle range. The range of the rotation angle may be properly determined based on regulation requirements in various nations, for example, 5° through 30°.

The monitor hinge 270 includes first and second monitor hinge parts 280 and 290 rotatably mounted to opposite edges of a support 255 fastened to the main body 22 with bolts 257.

The first monitor hinge part 280 (see Figures 13B and 13C) includes a third pin accommodating part 281 formed on one side of the support 255, a fourth pin accommodating part 82 formed on a corresponding side of the upper end 310b of the link member 310, and a third hinge pin 283 for insertion in the third and fourth pin accommodating parts 281 and 282. A first end 283a of the third hinge pin 283 is inserted in the third pin accommodating part 281 to allow the pin 283 and main body 22 to rotate relative to the link member 310. The second end 283b of the third hinge pin 283 is fixedly press-fitted in the fourth pin accommodating part 282 so that it cannot rotate relative thereto.

The second monitor hinge part 290 (see Figures 13B and 13C) includes a fifth pin accommodating part 291 formed on the other side of the support 255, a sixth pin accommodating part 292 formed on the corresponding side of the upper end 310b of the link member 310, a second link supporting part 293 rotatably inserted in the sixth pin accommodating part 92 from an outside of the upper part 310b of the link member 310 and formed with a spline accommodating part 293a. The second monitor hinge part 290 also includes a fourth hinge pin 294 having a first end 294a inserted in the fifth pin accommodating part 291 of the supporter 255 and a second end 294b matched to the spline accommodating part 293a of the second link supporting part 293.

Like the first, second and third hinge pins 233,244 and 283, the first end 294a of the fourth hinge pin 294 is rotatably inserted in the fifth pin accommodating part 291 formed on the supporter 255, having a predetermined friction therebetween. The second end 294b of the fourth hinge pin 294 is received in the spline accommodating part 293a of the second link supporting part 293 so as not to rotate relative thereto. Further, the second link supporting part 293 combined with the second end 294b of the fourth hinge pin 294 is also rotatably inserted in the sixth pin accommodating part 292. A hinge combination between the second link supporting part 293 and the sixth pin accommodating part 292 is interlocked with auxiliary link members 2100 and 2110 (to be described later). Herein, a friction between the fourth hinge pin 294 and the main body 22 prevents the link member 310 from rotating relative to the base member due to weight of the main body 22. Therefore, the friction must be greater than a torque generated due to the weight of the main body 22.

In the second monitor hinge part 290, as in the rotation-angle restricting device 250 restricting the rotation of the link member 310 against the base member 21 within the predetermined angle range, a monitor angle restrictive device 260 is provided to restrict the rotation of the main body 22 relative to the link member 310.

The monitor angle restricting device 260 (see Figure 13C) includes an arc-shaped second stopper 261 protruding from the left side of the support 255 adjacent to the fifth pin accommodating part 291, a second rotation-restricting washer 262 placed on the fourth hinge pin 294 and having a projection 262a to be engaged with the second stopper 261 according to the rotation direction of the main body 22, and a third stopper 263 combined to the left side of the support 55 and locked on and released from the projection 262a.

On the second rotation-restricting washer 262 is formed a non-circular shaped through hole 262b. The through hole 262b of the second rotation-restricting washer 262 is fixedly matched to the fourth hinged pin 294 so that the second rotation-restricting washer 262 rotates together with the fourth hinge pine 294.

The third stopper 263 is rotatably coupled to the left side of the supporting part with a bolt 267 adjacent to the fifth pin accommodating part 291. The third stopper 263 is employed to adjust an angle of the main body 22 while the monitor is used, and to fold the main body 22 on the base member 21 when the monitor is packed.

Between the left side of the support 255 and the third stopper 263 a second torsion spring 265 acts on the third stopper 263.

A spacer 298 is provided between the second link supporting part 293 and the second rotation-restricting washer 262 to maintain a space between the second link supporting part 293 and the second rotation-restricting washer 262.

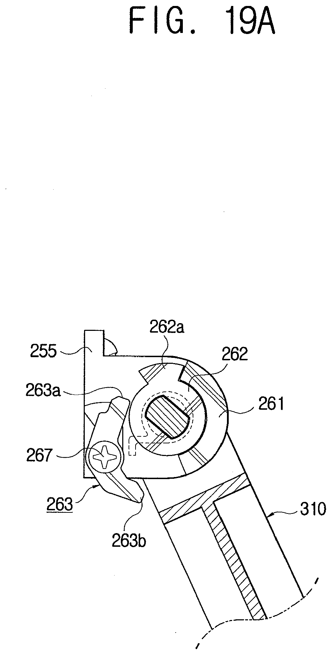

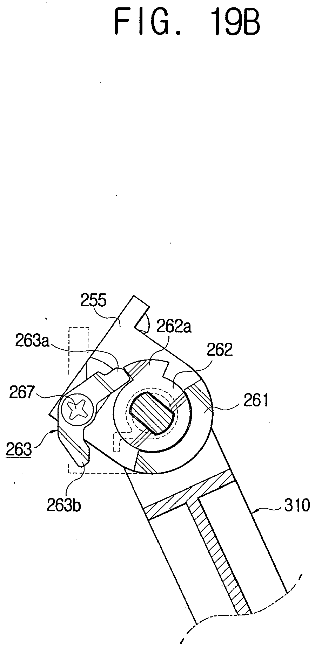

If the main body 22 is rotated relative to the link member 310 for enough to overcome the friction between the fourth hinge pin 294 and the support 255, the main body 22 is rotated on the third and fourth hinge pins 283 and 294, respectively. The main body 22 may be rotated until the projection 262a of the second rotation-restricting washer 262 engages with one side of the second stopper 261 or a first end 263a of the third stopper 263 (see Figures 19A or 19B). Therefore, if an allowable rotation angle of the main body 22 is different in various nations, the rotation angle of the main body 22 may be properly designed as necessary by altering sized of the projection 262a and the second stopper 261 and by altering a position of the third stopper 263.

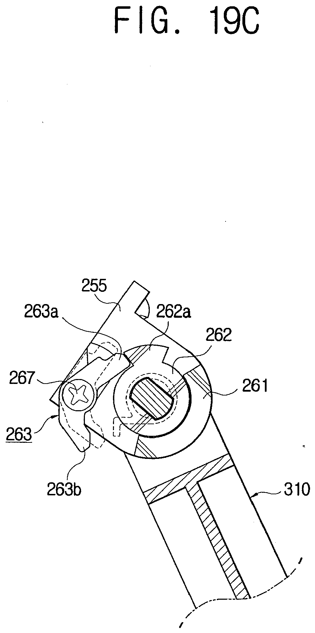

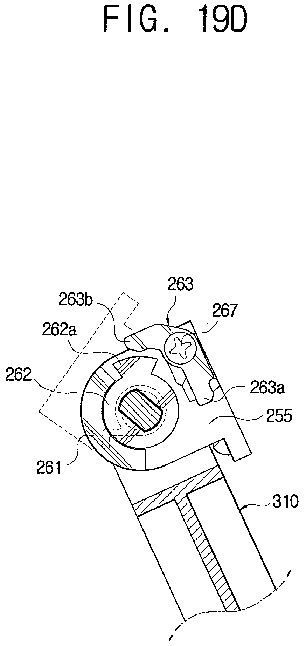

Further, to fold the main body 22 to the base member 21 in a parallel position, the main body 22 is rotated until the projection 262a is engaged with the other side of the second stopper 261 (see Figure 19D) without being engaged with the first end 263a of the third stopper 263 (see the dotted line on Figure 19C).

To restore the third stopper 263 to an original position, the second torsion spring is provided in the third stopper 263. Thus, after the projection 262a passes the third stopper 263 while the third stopper 263 is rotated on the bolt 267 by pushing a second end 263b thereof (see the rotation from the solid line to the dotted line in Figure 19C), if the second end 263b of the third stopper 263 is released by pushing, the third stopper 263 is restored to the original position by the elasticity of the second torsion spring 265.
With the configuration described above, the link member 310 rotates against the base member 21 at a predetermined angle, and the main body 22 rotates against the link member 310 at a predetermined angle.
Further the link member 310 and the main body 22 rotate together rather than independently of each other. That is, the main body 22 may be rotated at the predetermined angle by gearing with the rotation of the link member 310 against the base member 21.

To accomplish this structure, the present embodiment further includes the auxiliary link members 2100 and 2110 to link the rotation of the link member 310 against the base member 21 with the rotation of the main body 22.

The auxiliary link members 2100 and 2110 are bar-shaped, and are combined to the first and second link supporting parts 242 and 293, respectively, in parallel. In each of the first and second link supporting parts 242 and 293, are provided a plurality of pin holes spaced from each other at a predetermined distance. The second link supporting part 293 is provided with pin holes 293b. Particularly, pin holes (not shown) of the first link supporting part 242 correspond to pin holes 26b formed on the second fixing bracket 26. On both ends of the auxiliary link members 2100 and 2110 are formed through holes 2100a and 2110a to correspond to the pin holes 293b, 26b respectively.

Thus, in a state that the through holes 2100a and 2110a formed on both ends of the auxiliary link member 2100 and 2110 respectively correspond to the pin holes formed on the first and second link supporting parts 242 and 293 and the pin holes 26b formed on the second fixing bracket 26, the auxiliary link member 2100 and 2110 are coupled to the first and second link supporting parts 242 and 293 respectively, by a plurality of link fixing pins 2120. Therefore, the pair of auxiliary link member 2100 and 2110 move in parallel with each other.

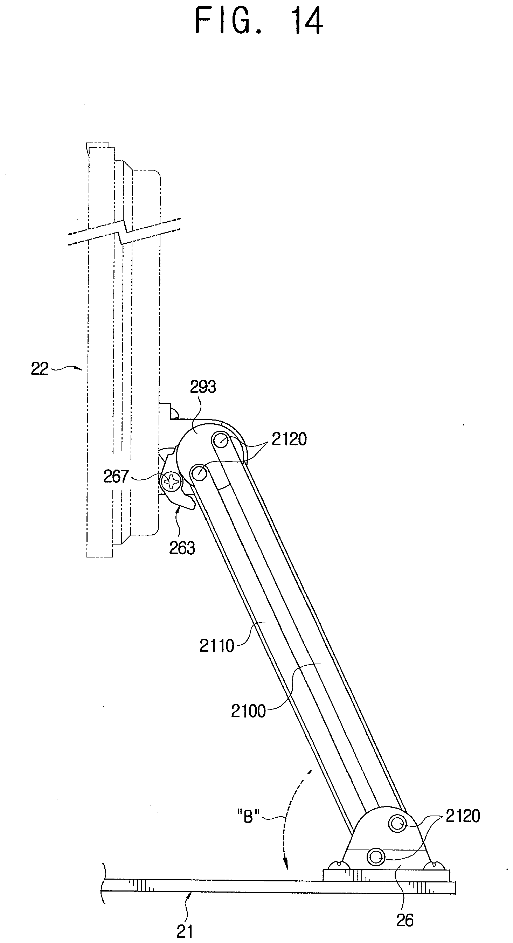

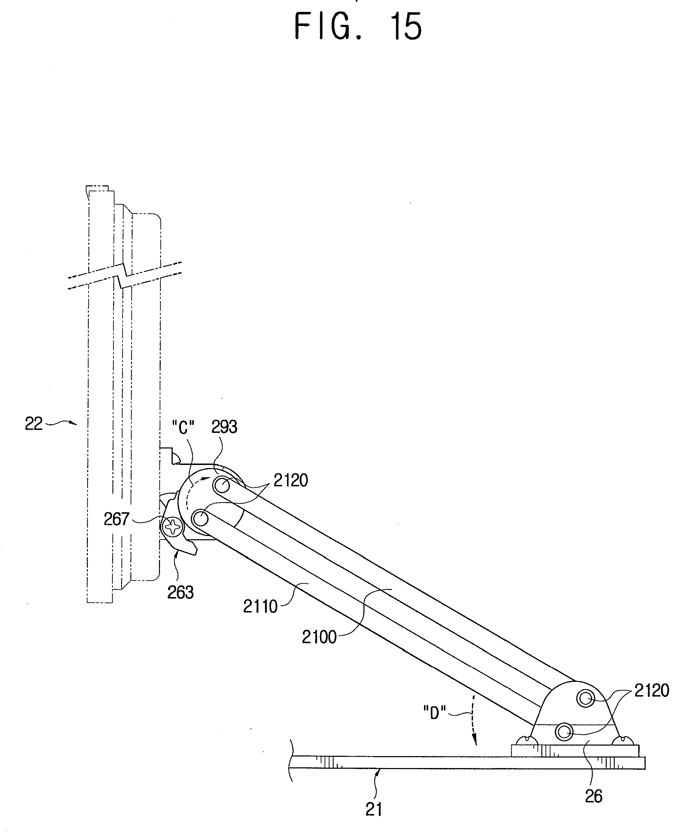

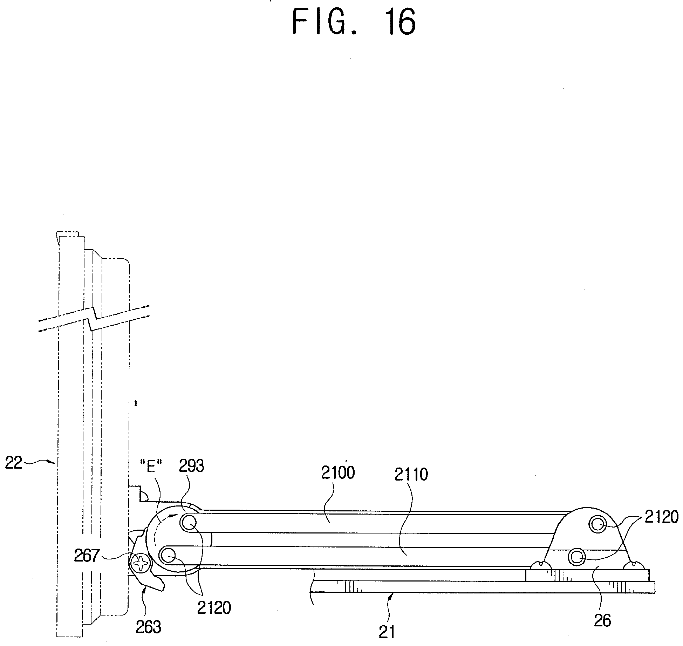

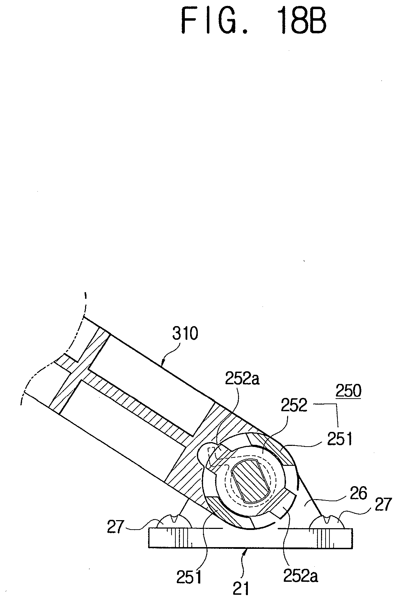

An operation of the monitor according to the present embodiment will be described hereinbelow.
In a state of the monitor illustrated in figure 14 (together with Figures 18A and 9A), the link member 310 is rotated relative to the base member along an arrow "B" in Figure 14 on the first and second hinge pins 233 and 244 (see Figures 15 and 18B). The link member 310 is rotated against the bias provided by the first torsion spring 235 on the first base hinge part 230.
The second link supporting part 293 provided at the upper part 310b of the link member 310 rotates, as shown in Figure 15, in a clockwise direction "C" at a predetermined angle due to the connection formed by the auxiliary link members 2100 and 2110. The rotation of the second link supporting part 293 rotates the third hinge pin 283, and the fourth hinge pin 294 and the support 255 are interlocked by the friction therebetween, so that the main body 22 is also rotated at the predetermined angle. The rotation angle of the main body 22 is comparatively small. Additionally, the rotation angle of the main body 22 may be adjusted by altering a length and a coupling position of the auxiliary link members 2100 and 2110.
In the state of the monitor illustrated in Figure 15, the link member 310 can be further rotated relative to the base member along the arrow "D" until one of the first stoppers 251 provided at the second base hinge part 240 engages with the projections 252a of the first rotation-restricting washer 252 (see Figure 18C) preventing further movement of the link member 310. This position is illustrated in Figure 16. During this movement of the link member 310, the second link supporting part 293 is rotated in a clockwise direction "E" beyond the state as shown in Figure 15.

To fold the main body 22 onto the base member 21, the projection 262a passes the first end 263a of the third stopper 263 while the third stopper 263 is rotated on the bolt 267 by pushing the second end 263b thereof so that the third stopper 263 moves from the solid line to the dotted line as shown in Figure 19C.

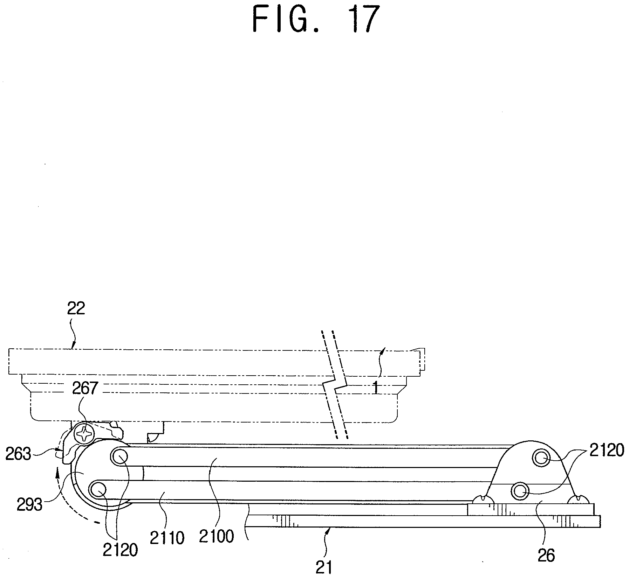

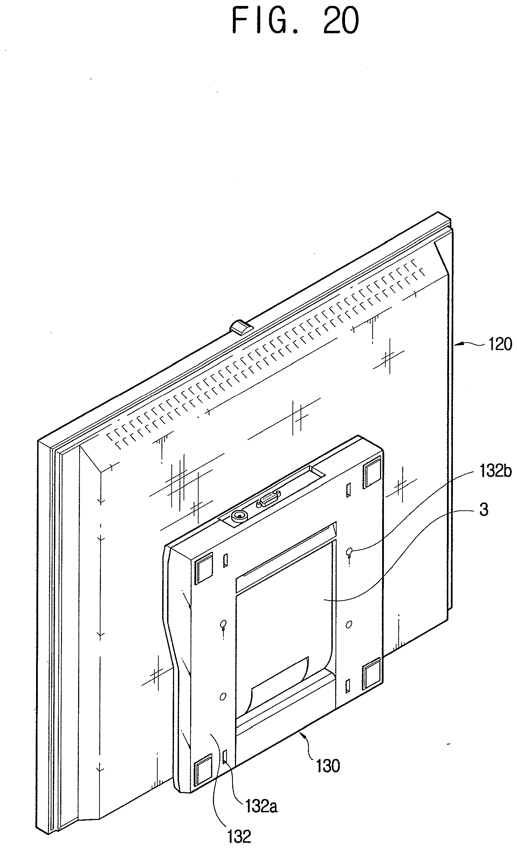

The main body 22 is then rotated in relation to the link member 310 on the third and fourth hinge pins 283 and 294 respectively so that the main body 22 is, as shown in Figure 17, laid on the base member 21. Here, the projection 262a of the second rotation-restricting washer 262 passes the first end 263a of the third stopper 263 and the moves as far as the second stopper 261 (see Figure 19D). Figure 20 is a perspective view illustrating the rear of the base member according to another embodiment not part of the present invention. As shown in Figure 20, the base member 130 includes a plurality of mounting holes 132b. The mounting holes 132b are formed to correspond to the plurality of second set of holes 145 of the base bracket 140 so as to enable the monitor body to be mounted on an arm stand 170.

As described above, because the main body 22 is completely laid on the base member 21, the packing volume of the monitor is decreased, thereby decreasing the cost of packing the monitor and the space required to store and transport the monitor.

In the above description, the first torsion spring 235 and the rotation-angle restricting device 250 are provided at the first and second base hinge parts 230 and 240 respectively. However, positions thereof may be exchanged.

Further, the monitor angle restricting device 260 restricting the angle adjustment of the monitor main body 22 may be provided at the first monitor hinge part 280.

As described above, the present invention provides a monitor, in which a bas member is installed onto an inclined plane such as a wall, an arm stand, etc., and more particularly, a monitor which is easily installed onto various arm stands according to regulations and standards set by VESA.

Further, the present invention provides a monitor which properly adjusts a tilting angle of a main body against a base member, and decreases costs to keep and carry the monitor by decreasing the packing volume thereof.

Although a few embodiments of the present invention have been shown and described, it would be appreciated by those skilled in the art that changes may be made in these embodiments without departing from the invention, the scope of which is defined in the appended claims.

## Claims

1. A monitor support, comprising a base member (130);
a coupling member (55) for attachment of a monitor main body thereto;
a link member (10) extending between the coupling member (55) and the base member (130) and pivotally mounted to the coupling member (55) to allow the monitor main body to be tilted for inclination adjustment,
wherein the pivotal mounting between the coupling member (55) and the link member (10) comprises a monitor angle restricting device (60) configured so as to restrict tilting of the coupling member (55) relative to the link member (10) within a predetermined reference angle range, **characterised in that** the predetermined reference angle range is defined at one end by an absolute end point beyond which the coupling member (55) cannot tilt and, at the opposite end, by an intermediate stop point, the monitor angle restricting device (60) being configured to allow the coupling member (55) to be further tilted beyond the intermediate stop point of the predetermined reference angle range to a second absolute end point beyond which the coupling member (55) cannot tilt when the coupling member (55) is rotated further relative to the link member (10).

2. A monitor support according to claim 1, wherein the monitor angle restricting device (60) comprises a stopper (61) provided on the coupling member (55), a rotation-restricting washer (62) coupled to the link member (10) and having a projection (62a) restricting rotation of the stopper (61), and a flat spring (63) having a projection (63a) which is restricted by the projection (62a) of the rotation-restricting washer (62) within the predetermined reference angle range, and which can pass the projection (62a) of the rotation-restricting washer (62) by being elastically deformed when the coupling member (55) is further pressed beyond the predetermine reference angle range.

3. A monitor support according to claim 2 wherein the intermediate stop point is defined where the projection (63a) of the flat spring (63) abuts the projection (62a) of the rotation restricting washer (62).

4. A monitor support according to claim 2 or claim 3 wherein the absolute end points of the tilting of the coupling member (55) relative to the link member (10) are defined where the projection (62a) of the rotation restricting washer (62) abuts each end of the stopper (61).

5. A monitor support according to any of claims 2 to 4, wherein the predetermined reference angle range is from -5° to 30°.

6. A monitor support according to any of claims 2 to 5, wherein the stopper (61) is provided on the coupling member (55) and the flat spring (63) is coupled to the coupling member (55).

7. A monitor support according to any of claims 1 to 6, further comprising a base hinge (20) to pivotally couple the link member (10) with the base member (130), wherein the coupling member (55) and the link member (10) are foldable relative to the base member (130).

8. A monitor support according to claim 7, wherein the base member (130) comprises a link accommodating part (135) to accommodate the link member (10) when the link member (10) is folded against the base member (130).

9. A monitor support according to claim 7 or claim 8, wherein the base hinge (20) comprises a tilt restricting device (50a, 50b) to restrict tilting of the link member (10) relative to the base member (130), wherein a tilting angle of the link member (10) against the base member (130) is adjusted by the tilt restricting device (50a, 50b).

10. A monitor support according to any of claims 7 to 9, further comprising an auxiliary link member (100,110) to transmit tilting movement of the link member (10) relative to the base member (130) to tilting movement of the coupling member (55) relative to the link member (10).

11. A monitor support according to claim 10, wherein the auxiliary link member (100, 110) is parallel with the link member (10) and pivotally couples the coupling member (55) with the base member (130).

12. A monitor support according to any of claims 1 to 11, wherein the base member (130) is provided with at least one cable port (133b) for receiving at least one of an electrical power and a display related signal cable (153), and the coupling member (55) is provided with a cable accommodating groove (55b) to accommodate a cable (153) connected to the cable port (133b).

13. A monitor support according to any of claims 1 to 12 wherein the link member (10) includes a cable accommodating groove (82).

14. A monitor support according to claim 12 or claim 13, wherein the link member (10) is provided with a cable accommodating part (10c) thereon to accommodate a portion of the cable (153) connected to the cable port (133b).

## Patentansprüche

1. Monitorträger, der Folgendes umfasst:
ein Basiselement (130);
ein Kopplungselement (55) zum Anbringen eines Monitorhauptkörpers daran;
ein Verbindungselement (10), das sich zwischen dem Kopplungselement (55) und dem Basiselement (130) erstreckt und schwenkbar an dem Kopplungselement (55) angebracht ist; um zu ermöglichen, dass der Monitorhauptkörper zur Neigungseinstellung geneigt wird,
wobei die schwenkbare Befestigung zwischen dem Kopplungselement (55) und dem Verbindungselement (10) eine Monitorwinkel-Beschränkungsvorrichtung (60) umfasst, die dafür konfiguriert ist, das Neigen des Kopplungselements (55) relativ zu dem Verbindungselement (10) innerhalb eines vorbestimmten Referenzwinkelbereichs zu beschränken, **dadurch gekennzeichnet, dass** der vorbestimmte Referenzwinkelbereich an einem Ende durch einen absoluten Endpunkt, über den hinaus sich das Kopplungselement (55) nicht neigen kann, und an dem gegenüberliegenden Ende durch einen Zwischenanschlagpunkt definiert ist, wobei die Monitorwinkel-Beschränkungsvorrichtung (60) dafür konfiguriert ist, zu ermöglichen, dass das Kopplungselement (55) ferner über den Zwischenanschlagpunkt des vorbestimmten Referenzwinkelbereichs zu einem zweiten absoluten Endpunkt geneigt wird, über den hinaus sich das Kopplungselement (55) nicht neigen kann, wenn das Kopplungselement (55) relativ zu dem Verbindungselement (10) weiter gedreht wird.

2. Monitorträger nach Anspruch 1, wobei die Monitorwinkel-Beschränkungsvorrichtung (60) Folgendes umfasst: einen Anschlag (61), der an dem Kopplungselement (55) vorgesehen ist, eine Drehungsbegrenzungsscheibe (62), die mit dem Verbindungselement (10) gekoppelt ist und einen Vorsprung (62a) aufweist, der die Drehung des Anschlags (61) begrenzt, und eine Blattfeder (63) mit einem Vorsprung (63a), die durch den Vorsprung (62a) der Drehungsbegrenzungsscheibe (62) innerhalb des vorbestimmten Referenzwinkelbereichs eingeschränkt ist und die den Vorsprung (62a) der Drehungsbegrenzungsscheibe (62) passieren kann, indem sie elastisch verformt wird, wenn das Kopplungselement (55) weiter über den vorbestimmten Referenzwinkelbereich hinaus gedrückt wird.

3. Monitorträger nach Anspruch 2, wobei der Zwischenanschlagpunkt dort definiert ist, wo der Vorsprung (63a) der Blattfeder (63) an dem Vorsprung (62a) der Drehungsbegrenzungsscheibe (62) anliegt.

4. Monitorträger nach Anspruch 2 oder Anspruch 3 wobei die absoluten Endpunkte des Neigens des Kopplungselements (55) relativ zu dem Verbindungselement (10) dort definiert sind, wo der Vorsprung (62a) der Drehungsbegrenzungsscheibe (62) an jedem Ende des Anschlags (61) anliegt.

5. Monitorträger nach einem der Ansprüche 2 bis 4, wobei der vorbestimmte Referenzwinkelbereich zwischen - 5 ° und 30 ° liegt.

6. Monitorträger nach einem der Ansprüche 2 bis 5, wobei der Anschlag (61) an dem Kopplungselement (55) vorgesehen ist und die Blattfeder (63) mit dem Kopplungselement (55) gekoppelt ist.

7. Monitorträger nach einem der Ansprüche 1 bis 6, der ferner ein Basisgelenk (20) umfasst, um das Verbindungselement (10) mit dem Basiselement (130) schwenkbar zu koppeln, wobei das Kopplungselement (55) und das Verbindungselement (10) relativ zu dem Basiselement (130) faltbar sind.

8. Monitorträger nach Anspruch 7, wobei das Basiselement (130) einen Verbindungsaufnahmeabschnitt (135) umfasst, um das Verbindungselement (10) aufzunehmen, wenn das Verbindungselement (10) gegen das Basiselement (130) geklappt ist.

9. Monitorträger nach Anspruch 7 oder Anspruch 8, wobei das Basisgelenk (20) eine Neigungsbeschränkungsvorrichtung (50a, 50b) umfasst, um das Neigen des Verbindungselements (10) relativ zu dem Basiselement (130) zu beschränken, wobei ein Neigungswinkel des Verbindungselements (10) gegen das Basiselement (130) durch die Neigungsbeschränkungsvorrichtung (50a, 50b) eingestellt wird.

10. Monitorträger nach einem der Ansprüche 7 bis 9, der ferner ein Hilfsverbindungselement (100, 110) umfasst, um eine Neigungsbewegung des Verbindungselements (10) relativ zu dem Basiselement (130) zu einer Neigungsbewegung des Kopplungselements (55) relativ zu dem Verbindungselement (10) zu übertragen.

11. Monitorträger nach Anspruch 10, wobei das Hilfsverbindungselement (100, 110) parallel zu dem Verbindungselement (10) angeordnet ist und das Kopplungselement (55) schwenkbar mit dem Basiselement (130) koppelt.

12. Monitorträger nach einem der Ansprüche 1 bis 11, wobei das Basiselement (130) mit mindestens einer Kabelöffnung (133b) versehen ist, um mindestens ein Strom- oder ein Anzeigesignalkabel (153) aufzunehmen, und wobei das Kopplungselement (55) mit einer Kabelaufnahmerille (55b) versehen ist, um ein Kabel (153) aufzunehmen, das mit der Kabelöffnung (133b) verbunden ist.

13. Monitorträger nach einem der Ansprüche 1 bis 12, wobei das Verbindungselement (10) eine Kabelaufnahmerille (82) umfasst.

14. Monitorträger nach Anspruch 12 oder Anspruch 13, wobei das Verbindungselement (10) mit einem Kabelaufnahmeabschnitt (10c) versehen ist, um einen Abschnitt des Kabels (153) aufzunehmen, der mit der Kabelöffnung (133b) verbunden ist.

## Revendications

1. Support d'écran de visualisation, comprenant :
un élément de base (130) ;
un élément d'accouplement (55) pour la fixation d'un corps principal d'écran de visualisation à celui-ci ;
un élément de liaison (10) qui s'étend entre l'élément d'accouplement (55) et l'élément de base (130) et qui est monté de manière pivotant sur l'élément d'accouplement (55) pour permettre au corps principal d'écran de visualisation d'être basculé pour le réglage d'inclinaison,
dans lequel le montage pivotant entre l'élément d'accouplement (55) et l'élément de liaison (10) comprend un dispositif de restriction de l'angle de l'écran de visualisation (60) configuré de manière à restreindre le basculement de l'élément d'accouplement (55) par rapport à l'élément de liaison (10) à l'intérieur d'une plage d'angle de référence prédéterminée, **caractérisé en ce que** la plage d'angle de référence prédéterminée est définie à une extrémité par un point final absolu au-delà duquel l'élément d'accouplement (55) ne peut pas basculer et, à l'extrémité opposée, par un point d'arrêt intermédiaire, le dispositif de restriction de l'angle de l'écran de visualisation (60) étant configuré pour permettre à l'élément d'accouplement (55) d'être basculé davantage au-delà du point d'arrêt intermédiaire de la plage d'angle de référence prédéterminée jusqu'à un deuxième point final absolu au-delà duquel l'élément d'accouplement (55) ne peut pas basculer lorsque l'élément d'accouplement (55) est tourné davantage par rapport à l'élément de liaison (10).

2. Support d'écran de visualisation selon la revendication 1, dans lequel le dispositif de restriction de l'angle de l'écran de visualisation (60) comprend une butée (61) prévue sur l'élément d'accouplement (55), une rondelle restreignant la rotation (62) couplée à l'élément de liaison (10) et possédant une saillie (62a) qui restreint la rotation de la butée (61), et un ressort plat (63) ayant une saillie (63a) qui est restreinte par la saillie (62a) de la rondelle restreignant la rotation (62) à l'intérieur de la plage d'angle de référence prédéterminée et qui peut franchir la saillie (62a) de la rondelle restreignant la rotation (62) en étant déformé élastiquement lorsque l'élément d'accouplement (55) est comprimé davantage au-delà de la plage d'angle de référence prédéterminée.

3. Support d'écran de visualisation selon la revendication 2, dans lequel le point d'arrêt intermédiaire est défini à l'endroit où la saillie (63a) du ressort plat (63) est contiguë à la saillie (62a) de la rondelle restreignant la rotation (62).

4. Support d'écran de visualisation selon la revendication 2 ou la revendication 3, dans lequel les points finaux absolus du basculement de l'élément d'accouplement (55) par rapport à l'élément de liaison (10) sont définis à l'endroit où la saillie (62a) de la rondelle restreignant la rotation (62) est contiguë à chaque extrémité de la butée (61).

5. Support d'écran de visualisation selon l'une quelconque des revendications 2 à 4, dans lequel la plage d'angle de référence prédéterminée va de -5° à 30°.

6. Support d'écran de visualisation selon l'une quelconque des revendications 2 à 5, dans lequel la butée (61) est prévue sur l'élément d'accouplement (55) et le ressort plat (63) est couplé à l'élément d'accouplement (55) .

7. Support d'écran de visualisation selon l'une quelconque des revendications 1 à 6, comprenant en outre une charnière de base (20) pour accoupler l'élément de liaison (10) de manière pivotante avec l'élément de base (130), dans lequel l'élément d'accouplement (55) et l'élément de liaison (10) peuvent être pliés par rapport à l'élément de base (130).

8. Support d'écran de visualisation selon la revendication 7, dans lequel l'élément de base (130) comprend une partie de réception de liaison (135) pour recevoir l'élément de liaison (10) lorsque l'élément de liaison (10) est plié contre l'élément de base (130).

9. Support d'écran de visualisation selon la revendication 7 ou la revendication 8, dans lequel la charnière de base (20) comprend un dispositif de restriction de basculement (50a, 50b) pour restreindre le basculement de l'élément de liaison (10) par rapport à l'élément de base (130), dans lequel un angle de basculement de l'élément de liaison (10) contre l'élément de base (130) est ajusté par le dispositif de restriction de basculement (50a, 50b).

10. Support d'écran de visualisation selon l'une quelconque des revendications 7 à 9, comprenant en outre un élément de liaison auxiliaire (100, 110) pour transmettre le mouvement de basculement de l'élément de liaison (10) par rapport à l'élément de base (130) au mouvement de basculement de l'élément d'accouplement (55) par rapport à l'élément de liaison (10).

11. Support d'écran de visualisation selon la revendication 10, dans lequel l'élément de liaison auxiliaire (100, 110) est parallèle à l'élément de liaison (10) et couple l'élément d'accouplement (55) de manière pivotante à l'élément de base (130).

12. Support d'écran de visualisation selon l'une quelconque des revendications 1 à 11, dans lequel l'élément de base (130) est pourvu d'au moins une prise de câble (133b) pour recevoir l'un au moins parmi un câble d'alimentation électrique et un câble de signal associé à l'affichage (153), et l'élément d'accouplement (55) est pourvu d'une rainure de réception de câble (55b) pour recevoir un câble (153) connecté à la prise de câble (133b).

13. Support d'écran de visualisation selon l'une quelconque des revendications 1 à 12 dans lequel l'élément de liaison (10) comporte une rainure de réception de câble (82) .

14. Support d'écran de visualisation selon la revendication 12 ou la revendication 13, dans lequel l'élément de liaison (10) est pourvu d'une pièce de réception de câble (10c) pour recevoir une partie du câble (153) connecté à la prise de câble (133b).
